(19) Europäisches Patentamt
European Patent Office
Office européen des brevets

(11) **EP 1 528 294 B1**

(12) **EUROPÄISCHE PATENTSCHRIFT**

(45) Veröffentlichungstag und Bekanntmachung des Hinweises auf die Patenterteilung:
**31.07.2013  Patentblatt 2013/31**

(51) Int Cl.:
*F16H 61/12* *(2010.01)*     *G01M 13/02* *(2006.01)*
*F16H 57/01* *(2012.01)*

(21) Anmeldenummer: **04024919.5**

(22) Anmeldetag: **20.10.2004**

(54) **Diagnoseverfahren sowie Diagnosevorrichtung sowie die Verwendung dieser Diagnosevorrichtung für ein schaltbares Synchrongetriebe**

Diagnosis method and diagnosis apparatus and the use of the diagnosis apparatus for a shiftable synchronised transmission

Procédé et appareil de diagnostic ainsi que l'utilisation de celui-ci pour boîte de vitesses commutable synchronisée.

(84) Benannte Vertragsstaaten:
**DE FR IT SE**

(30) Priorität: **28.10.2003  DE 10350129**

(43) Veröffentlichungstag der Anmeldung:
**04.05.2005  Patentblatt 2005/18**

(73) Patentinhaber: **MAN Truck & Bus AG**
**80995 München (DE)**

(72) Erfinder: **Drimml, Peter**
**85221 Dachau (DE)**

(56) Entgegenhaltungen:
**EP-A2- 1 134 456     EP-A2- 1 146 485**
**DE-A1- 3 808 004     DE-A1- 3 905 333**
**JP-A- 63 234 131**

## Beschreibung

## Technisches Gebiet

Die Erfindung betrifft eine Diagnosevorrichtung sowie ein Diagnoseverfahren zur Überwachung von Schaltvorgängen in einem zwischen einem Kupplungselement und einem Achsantrieb angeordneten Synchrongetriebe, mit dem wenigstens zwei Drehzahlwefte einer drehbar gelagerten und über das Kupplungselement mit einer Antriebseinheit in Wirkverbindung bringbaren Getriebeeingangswelle des Synchrongetriebes erfasst werden.

Jeder Motor, insbesondere jeder Verbrennungsmotor, arbeitet zumindest zeitweise zwischen einer Mindest- und einer Höchstdrehzahl, die den leistungsfähigen Drehzahlbereich, in dem nur ein begrenztes Drehmoment abgegeben werden kann, begrenzen. Die jeweils erzielbaren Belastungs- und Geschwindigkeitsbereiche werden hierbei durch die Leistung des Motors bestimmt und können der sogenannten Zugkraft-Hyperbel entnommen werden. Würde die Leistung eines Motors nunmehr direkt auf die Antriebsräder eines Kraftfahrzeugs übertragen, so könnten kleinere Fahrgeschwindigkeiten nur mit geringen Motordrehzahlen, die nicht im leistungsfähigen Drehzahlbereich liegen, realisiert werden. Aus diesem Grund wird die Drehzahl der Antriebsräder gegenüber der Motordrehzahl durch ein Wechselgetriebe und einen Achsantrieb derart gewandelt, dass sich an den Antriebsrädern Drehzahlen einstellen, durch die die jeweils gewünschte Fahrgeschwindigkeit erreicht wird.

In Fahrzeugen mit Front- oder Untersitzmotor und Hinterradantrieb, und somit bspw. in der überwiegenden Anzahl der Nutzfahrzeuge, werden gleichachsige Getriebe, die auch als 3-Wellen-Getriebe (Antriebs-Haupt- und Vorlegewelle) bezeichnet werden, eingesetzt. Typisch für diese Getriebe ist, dass die Antriebs- und die Abtriebswelle zumindest annähernd in einer Fluchtlinie liegen. Die Übersetzung wird, außer im direkten Gang, über zwei Zahnradpaarungen erreicht.

Um ein verhältnismäßig leichtes und geräuschloses Schalten der vorgenannten Getriebe zu ermöglichen, ist eine Synchronisiereinrichtung vorgesehen, die sicherstellt, dass vor dem eigentlichen Schaltvorgang, bei dem innerhalb des Getriebes zunächst die Innenverzahnung einer Schaltmuffe mit der Außenverzahnung eines Gangrades in Eingriff gebracht wird, die Schaltmuffe und das Gangrad die gleiche Drehzahl haben.

Die wichtigsten Bauelemente einer Synchronisiereinrichtung sind Schaltmuffe, Synchronkörper, Druckstücken, Haltefedern, Synchronring und Gangrad. Wesentlich hierbei ist, dass der Synchronring innen eine kegelförmige Reibfläche und außen eine Sperrverzahnung aufweist während das Gangrad auf der dem Synchronring zugewandten Seite außen über eine kegelförmige Reibfläche, hinter der sich die Schaltverzahnung befindet, verfügt. Bei jedem Schaltvorgang unterliegen die Synchronringe einem Verschleiß, da die Angleichung der unterschiedlichen Drehzahlen durch die Ausnutzung der an den Reibflächen des Synchronrings und des Gangrads auftretenden Gleitreibung erfolgt.

Obwohl der Zustand der Synchronringe von entscheidender Bedeutung für die Betriebstüchtigkeit des Getriebes ist, ist es bislang nicht möglich, bereits während des Betriebs, etwa eines Kraftfahrzeugs, zuverlässige Informationen über den Zustand der Synchronringe aufzunehmen und diese zu einem späteren Zeitpunkt, etwa bei einer Inspektion auszulesen. So sind zwar eine Vielzahl von Fahrzeugdiagnoseverfahren bekannt, allerdings werden diese Systeme nicht zur Überwachung bzw. Auswertung von Getriebeschäden, wie etwa Beschädigungen der Synchronringe herangezogen.

Ein derartiges Diagnosesystem ist etwa aus der DE 199 48 663 A1 bekannt, bei dem der Fehlerspeicherinhalt einer Vielzahl elektronischer Steuereinheiten mit Hilfe eines kraftfahrzeugexternen Steuergerätes ausgelesen wird. Wesentlich an dem beschriebenen System ist, dass die in den Fehlerspeichern oder auch in anderen Datenspeichern abgelegten Daten kraftfahrzeugintern einer bestimmten Kraftfahrzeugkomponente zugeordnet werden. Im Getriebe auftretende Fehler bzw. Verschleißerscheinungen werden durch dieses Diagnosesystem allerdings nicht erfasst.

Weiterhin ist aus der DE 199 49 475 A1 ein Diagnosesystem sowie ein Verfahren zur Erfassung von Funktionsstörungen in Getrieben bekannt. Hierbei ist vorgesehen, die in der Steuervorrichtung einer Getriebebaueinheit abgegriffenen Messgrößen und Statusinformationen durch Informationen von zusätzlich innerhalb eines Kraftfahrzeugs vorgesehenen Erfassungseinrichtungen zu ergänzen und zu verarbeiten. Die auf diese Weise ermittelten Daten werden intern mit Referenzgrößen verglichen, die im Vorfeld der Inbetriebnahme des Getriebes mittels Referenzrnessungen aufgenommen worden sind. Mit dem in dieser Druckschrift beschriebenen System werden im Wesentlichen, für den Betrieb des Getriebes relevante Temperaturen sowie Schmiermitteldrücke überwacht. Die Diagnose von Verschleißerscheinungen sowie die Vorhersage über die Größe von Wartungsintervallen lässt das System dagegen nicht zu.

Des Weiteren ist aus der EP 1 146 485 A2 die den nächstliegenden Stand der Technik bildet, ein Informations- und/oder Servicesystem für Antriebskomponenten, Insbesondere für den Einsatz in Fahrzeugen bekannt Das System weist eine erste, der Antriebs- oder Funktionskomponente zugeordnete Teilinformationseinrichtung auf, die zur Erfassung der den Funktionszustand und/oder die Betriebsweise wenigstens mittelbar charakterisierenden Größen vorgesehen ist. Zusätzlich weist das System eine zweite Teilinformationseinrichtung zur wenigstens tellweisen Erfassung der die Fahrstrecke wenigstens mittelbar charakterisierenden Größen auf. Beide Teilinformationseinrichtungen sind mit einer zentralen Datenbereitstellungseinrichtung verbunden , die mindestens eine Zuordnungseinrichtung zur Zuordnung der den Funktionszustand und die Fahrstrecke charakterisierenden Größen unter Bildung von sogenannten Datenpaaren aufweist. Gegebenenfalls kann auch eine Zwischenspeicherung der Datenpaare erfolgen oder es kann bei Vorsehen einer Auswerteinrichtung die Auswertung dieser Datenpaare erfolgen. Die Datenpaare oder die Auswertergebnisse werden hierbei einem Informationsempfänger übermittelt

Ausgehend von dem bekannten Stand der Technik liegt der Erfindung daher die Aufgabe zu Grunde, eine Diagnosevorrichtung sowie ein Diagnoseverfahren für schaltbare Synchrongetriebe anzugeben, mit dem auf einfache Weise zuverlässig Informationen über den Zustand eines Getriebes gewonnen werden können. Insbesondere soll das erfindungsgemäße Verfahren bzw. die Vorrichtung sicher stellen, dass Synchronschäden frühzeitig erkannt werden und Erkenntnisse über mögliche Ursachen gewonnen werden.

Diese Aufgabe wird mit einem Verfahren gemäß Anspruch 1 bzw. einer Vorrichtung nach Anspruch 9 gelöst. Spezielle Ausführungsformen der Erfindung sind der nachfolgenden Beschreibung sowie dem Ausführungsbeispiel zu entnehmen.

Erfindungsgemäß zeichnet sich die Diagnosevorrichtung bzw. das Diagnoseverfahren für Schaltvorgänge, die in einem zwischen einem Kupplungselement und einem Achsantrieb angeordneten Synchrongetriebe ausgelöst werden, bei dem In einem Zeitintervall wenigstens zwei Drehzahlwerte einer drehbar gelagerten und über das Kupplungselement mit einer Antriebseinheit in Wirkverbindung bringbaren Getriebeeingangswelle des Synchrongetriebes erfasst werden, dadurch aus dass die wenigstens zwei Drehzahlwerte und das dazugehörige Zeitintervall an eine Auswerteeinheit übertragen werden und die Auswerteeinheit aus den wenigstens zwei Drehzahlwerten unter Berücksichtigung des dazugehörigen Zeitintervalls zumindest einen Drehzahlgradienten bestimmt sowie unter Zugrundelegung des zumindest einen Drehzahlgradienten einen Gütekennwert für den Schaltvorgang festlegt.

Kerngedanke der Erfindung ist hierbei, dass unter Berücksichtigung des Drehzahlgradienten der Getriebeeingangswelle, also der Drehzahländerung pro Zeiteinheit am Getriebeeingang, die während eines Schaltvorgangs an den Getriebeeinbauteilen, insbesondere den Synchronringen, angreifenden Kräfte und/oder Momente ermittelt werden. Wie insbesondere in der Beschreibung des Ausführungsbeispiels noch näher ausgeführt werden wird, ist dies möglich, da die Kraft, mit der ein Schaltvorgang ausgelöst wird, und die Schnelligkeit einer Drehzahländerung der Getriebeeingangswelle in einem direkten Zusammenhang stehen. Wird der Schaltvorgang durch eine große Schaltkraft, die bspw. durch eine auf den für die Gangwahl vorgesehenen Ganghebel einwirkenden Kraft hervorgerufen wird, ausgelöst, so wird den Synchronringen der Synchronisiereinrichtung eine hohe Synchronisierungsarbeit abverlangt und die Drehzahl der Getriebeeingangswelle wird sehr schnell erhöht. Hieraus folgt, dass ein großer Drehzahlgradient, also eine schnelte Drehzahländerung der Getriebeeingangswelle pro Zeiteinheit während des Schaltvorgangs, ein großes Reibmoment und somit einen erhöhten Verschleiß an den Synchronringen zur Folge hat.

Vorzugsweise wird der Gütekennwert daher derart festgelegt, dass die Kenntnis des entsprechenden Wertes direkte Rückschlüsse auf den während eines Schaltvorgangs an den Getriebeeinbauteilen stattfindenden Verschleiß ermöglicht. Eine besondere Ausführungsform der Erfindung sieht daher vor, dass in der Auswerteeinheit Referenzdaten hinterlegt und derart mit den jeweils ermittelten Glitekennwerten verglichen werden, dass qualitative und/oder quantitative Informationen über Beschädigungen sowie Verschleiß an den Synchronringen gewonnen werden und mit Hilfe einer Ausgabeeinheit dargestellt werden. Derartige Referenzdaten können bspw. bei Versuchen auf einem Prüfstand oder bei Testfahrten ermittelt werden.

In diesem Zusammenhang ist es sowohl möglich ein im Kraftfahrzeug befindliches Display als auch einen Monitor einer externen Datenverarbeitungseinheit, bspw. eines Laptops, als Ausgabeeinheit für die Darstellung der ermittelten Gütekennwerte zu verwenden.

In einer besonderen Ausführungsform des erfindungsgemäßen Diagnoseverfahrens ist die Länge des jeweiligen für die Messung bzw. Auswertung der Drehzahlwerte vorgesehenen Zeitintervalls zu verändern, indem ein Wert für das Zeitintervall über eine interne oder externe Eingabeeinheit in der Auswerteeinheit oder dem Sensorelement hinterlegt wird. Darüber hinaus ist es selbstverständlich auch denkbar die Anzahl der pro Zeitintervall aufgenommenen Messwerte zu variieren und/oder das Zeitintervall gegen einen Nullwert streben zu lassen, um so die zeitliche Ableitung der Funktion der Drehzahlwerte innerhalb des Zeitintervalls zu bilden.

Bei der Verwendung des erfindungsgemäßen Verfahrens zur Diagnose von Schaltvorgängen ist es unerheblich, ob die auf das Synchrongetriebe einwirkende Kraft direkt, also mechanisch vom Ganghebel auf die Getriebeeinbauteile übertragen wird, oder ob hierfür Hilfsenergien eingesetzt werden, durch die der eigentliche Schaltvorgang des Fahrers von der Schaltung des Ganges im Getriebe mechanisch entkoppelt wird. Insbesondere in modernen Nutzfahrzeugen ist es üblich, dass der Schaltvorgang des Fahrers mittels hydraulischer und/oder pneumatischer Schalthilfsvorrichtungen wenigstens teilweise verstärkt wird, so dass der Fahrer oftmals kein Gefühl mehr dafür hat, welche Kräfte durch seinen Schaltvorgang auf das Getriebe einwirken.

In einer weiteren besonderen Ausführungsform des erfindungsgemäßen Diagnoseverfahrens wird daher bei jedem Schaltvorgang zusätzlich eine Ganginformation über den jeweils neu im Synchrongetriebe eingelegten Gang erfasst und an die Auswerteeinheit übertragen. Vorzugsweise ist es somit möglich, einen Datensatz zu erzeugen, in dem der jeweils geschaltete, neue Gang dem für den Schaltvorgang in einem Zeitintervall ermittelten Drehzahlgradlenten zugeordnet wird. Auf diese Weise ist es denkbar Auswertungen darüber zu erhalten, bei welchem Schaftvorgang die Belastung der Getriebeeinbauteile, insbesondere der Synchronringe, besonders hoch ist und/oder bei welcher Anzahl von Schaltvorgängen eine Schädigung der Getriebeeinbautelle zu erwarten ist.

Um eine Information über den jeweils gewählten Gang zu erhalten, wird zunächst die Drehzahl der Abgangswelle des Getriebes bei eingelegtem Gang erfasst und schließlich über die Bestimmung des Verhältnisses der Drehzahlen an der Getriebeeingangs- sowie an der Getriebeabgangswelle der eingelegte Gang ermittelt. Vorteilhafterweise ist hierzu an der Getriebeabgangswelle ein Sensorelement vorgesehen, mit dem die Drehzahl ermittett und über eine Datenleitung an die Auswerteeinheit übertragen wird.

Bei einer weiteren speziellen Ausgestaltung der Erfindung erfolgt die Übermittlung der an der Getriebeeingangswelle erfassten Drehzahlwerte an die Auswerteeinheit ausschließlich während ein Schaltvorgang ausgeführt wird. Auf diese Weise wird die Aufnahme unnötiger Messwerte vermieden. Sobald ein Kraftfahrzeugführer den Ganghebel betätigt, erfolgt die Erfassung, Übermittlung und Auswertung der Drehzahlwerte. Ist der Schaltvorgang beendet werden keine weiteren Drehzahtwerte an die Auswerteeinheit übermittelt.

Sofern an der Getriebeeingangswelle bereits ein Sensorelement zur Erfassung von Drehzahtwerten, die bspw. in der Motorsteuerung verwendet werden, vorgesehen ist, eignet es sich besonders, die von diesem Sensorelement erfassten Drehzahlwerte für eine Verarbeitung in die für das erfindungsgemäße Diagnoseverfahren eingesetzten Auswerteeinheit zu übertragen. Für die Datenübertragung ist es in jedem Fall möglich, den Datenaustausch entweder mit Hilfe einer Datenleitung oder auch mittels kabeloser Datenübertragungstechniken, wie Funk- oder Infrarotübertragungstechniken, zu realisieren.

Eine weitere Ausgestaltung des erfindungsgemäßen Verfahrens sieht vor, die Auswerteeinheit in einen Fahrzeugrechner zu integrieren, der für die Überwachung sowie Regelung und Steuerung aller fahrzeugintemen Prozesse vorgesehen ist. Das Auslesen der Daten, die die Informationen über Beschädigungen und/ oder Verschleiß der Getriebeeinbauteile, insbesondere der Synärortringe, beinhalten, erfolgt in diesem Fall mit Hilfe einer externen Rechnereinheit. Die externe Rechnereinheit wird hierbei mittels einer Steckverbindung oder einer berührungslos arbeitenden Schnittstelle, vorzugsweise einer Infrarotschnittstelle, mit dem Fahrzeugrechner verbunden.

Alternativ ist es selbstverständlich aber auch denkbar, dass die Auswerteeinheit in einer externer Rechnereinheit integriert ist und die von dem Sensorelement aufgenommenen Drehzahlverläufe der Getriebeeingangswelle über entsprechend vorgesehene Daten-Schnittstellen ausgelesen werden.

Eine weitere, besonders geeignete Ausführungsform des erfindungsgemäßen Diagnoseverfahrens sieht vor, dass unter Berücksichtigung des Gütekennwertes ein die Qualität eines Schaltvorganges des Synchrongetriebes betreffender Wert ermittelt wird. Da aus der Größe des Drehzahlgradienten der Getriebeeingangswelle während eines Schaltvorgangs die von den Synchronringen zu leistende Synchronisierungsarbeit und damit auch die für die Auslösung des Schaltvorgangs eingesetzte Kraft ermittelbar sind, ist es möglich die, bspw. von dem Fahrer eines Nutzfahrzeugs eingesetzte Kraft bei der Betätigung des Ganghebels zu ermitteln. Die Ermittlung der vorgenannten Information ermöglicht neben der Diagnose eines Synchrongetriebes somit sowohl eine Anpassung des Getriebes an die Fahrerbedürfnisse als auch eine zielgerichtete Schulung der Fahrer. Selbstverständlich ist es ebenfalls denkbar, an Hand der so gewonnenen Erkenntnisse über den Zustand der Synchronringe auch Aussagen über fahrzeugspezifische Inspektions- bzw. Wartungsintervalle zu machen.

Die der Erfindung zu Grunde liegende Aufgabe wird weiterhin mit einer Diagnosevorrichtung nach dem Oberbegriff des Anspruches 9 gelöst, die sich dadurch auszeichnet, dass das Sensorelement mit einer Auswerteeinheit verbunden ist, mit der unter Berücksichtigung von wenigstens zwei der erfassten Drehzahlwerten und des dazugehörigen Zeitintervalls zumindest ein Drehzahlgradient ermittelt und unter Zugrundelegung des Drehzahlgradienten ein Gütekennwert für den Schaltvorgang festgelegt ist, und wobei unter Berücksichtigung der Drehzahländerung pro Zeiteinheit am Getriebeeingang die während eines Schaltvorgangs an den Getriebeeinbauteilen, insbesondere den Synchronringen, angreifenden Kräfte und/oder Momente ermittelt werden.

Vorzugsweise handelt es sich bei der Antriebseinheit, die mit der Getriebeeingangswelle in Wirkverbindung bringbar ist um einen Verbrennungsmotor, insbesondere einen Dieselmotor. Das Sensorelement ist in einer besonders geeigneten Ausführungsform als berührungslos arbeitender Messwertaufnehmer ausgeführt. Besonders eignet sich in diesem Zusammenhang die Verwendung eines induktiven Messwertaufnehmers.

Auf besonders bevorzugte Weise werden mit der erfindungsgemäßen Diagnosevorrichtung bzw. mit dem Diagnoseverfahren Daten generiert, die Informationen über den Zustand der in einem Synchrongetriebe vorgesehenen Synchronringe sowie über das Schaltverhalten eines Fahrzeugführers liefern. Insbesondere können die Kräfte ermittelt werden, mit denen der Ganghebel während eines Schaltvorgangs betätigt wird. Die so gewonnenen Erkenntnisse können sowohl zur Weiterentwicklung eines Getriebes als auch zur Festlegung der notwendigen Wartungsintervalle genutzt werden. Selbstverständlich ist es ebenfalls denkbar, auf der Grundlage der Erkenntnisse über die Schaltvorgänge entsprechende Fahrerschulungen durchzuführen.

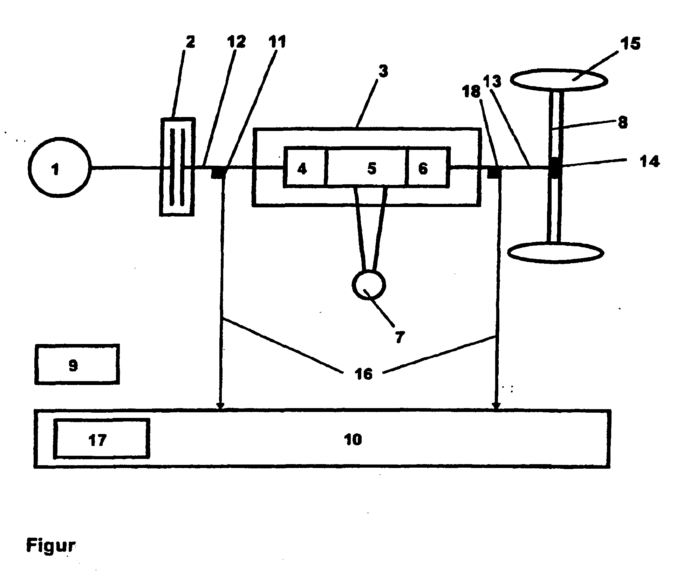

Im Nachfolgenden wird die Erfindung ohne Beschränkung des allgemeinen Erfindungsgedankens an Hand eines Ausführungsbeispiels unter Bezugnahme auf die Figur näher beschrieben.

Es zeigt die Figur ein Übersichtsbild eines Handschaltgetriebes

In der Figur ist ein Übersichtsbild eines handgeschalteten Synchrongetriebes dargestellt, wie es bspw. in Nutzfahrzeugen des Anmelders zum Einsatz kommt. Derartige Nutzfahrzeuge weisen einen als Untersitzmotor ausgeführten Verbrennungsmotor 1 und wenigstens eine angetriebene Hinterachse 8 auf. Durch das Synchrongetriebe 3 und den Achsantrieb 14 wird sicher gestellt, dass die Drehzahl der Antriebsräder 15 gegenüber der Motordrehzahl derart gewandelt wird, dass sich an den Antriebsrädern 15 Drehzahlen einstellen, durch die die jeweils gewünschte Fahrgeschwindigkeit erreicht wird. Darüber hinaus ist in dem Nutzfahrzeug wenigstens ein Fahrzeugrechner 10 vorgesehen, in dem alle fahrzeugrelevanten Statusinformationen zusammengeführt und die erforderlichen Steuer- bzw. Regelgrößen, bspw. für die Motorsteuerung, generiert werden. Die vom Fahrer des Fahrzeugs benötigten Daten lassen sich auf dem Fahrerdisplay 9 darstellen.

Sobald die Kupplung 2 geschlossen ist, ist der Verbrennungsmotor 1 kraftschlüssig mit dem Synchrongetriebe 3 verbunden. Das Synchrongetriebe 3 verfügt über eine Getriebeeingangswelle 12 sowie eine Abtriebswelle 13. Während die als Antriebswelle ausgeführte Getriebeeingangswelle 12 mit der Kupplung 2 verbindbar ist, stellt die Abtriebswelle 13 eine kraftschlüssige Verbindung zwischen dem Synchrongetriebe 3 und dem Achsantrieb 14 der Hinterachse 8 dar.

Das dargestellte handschaltbare Synchrongetriebe 3 verfügt über 16 Vorwärtsgänge. Diese 16 Gänge setzen sich zusammen aus in Reihe geschalteten vier Gängen in der Hauptgruppe 5, zwei Gängen in der Vorschalt- oder Splitgruppe 4 und zwei Gängen in der Planeten- oder Bereichsgruppe 6. Die vier Gänge in der Hauptgruppe 5 werden mit dem Ganghebel 7, der über zwei Hydraulikleitungen (nicht dargestellt) mit dem Synchrongetriebe 3 in Wirkverbindung steht, manuell geschaltet. Die Schaltung der Split- 4 sowie der Bereichsgruppe 6 erfolgt elektro-pneumatisch durch Einsatz entsprechender Ventile.

Der Schaltvorgang lässt sich in fünf Phasen aufteilen. In der ersten Phase wird die Kupplung 2 durch Betätigen eines Pedals oder eines Schalters geöffnet und in der zweiten Phase wird das Hauptgetriebe 5 mit dem Ganghebel 7 in die Neutralstellung überführt. In der dritten Phase ist das Hauptgetriebe 5 in der Neutralstellung. Die Zahnräder am Getriebeausgang drehen sich somit mit einer Drehzahl, die proportional zur Fahrzeuggeschwindigkeit ist und die sich während des Schaltvorgangs nur unwesentlich ändert. Da in dieser Phase die Kupplung 2 geöffnet und das Hauptgetriebe 5 in Neutralstellung ist, wird den Zahnrädern am Getriebeeingang keine Drehzahl aufgezwungen, so dass die Getriebeeingangsdrehzahl in Abhängigkeit der Massenträgheit am Getriebeeingang langsam fällt.

In der vierten Phase des Schaltvorgangs drückt der Fahrer den Ganghebel 7 in eine neue Ganghebelposition, so dass über die Synchronringe im Synchrongetriebe 3 den Zahnrädern am Getriebeeingang die Drehzahl des neuen Ganges aufgezwungen wird und sich bei geöffneter Kupplung 2 ein Kraftschluss zwischen der Hinterachse 8 und der Getriebeeingangswelle 12 einstellt.

Schaltet der Fahrer in einen kleineren Gang, ist die neue Drehzahl der Getriebeeingangswelle immer größer als die alte. Je nachdem wie stark, bzw. wie schnell der Fahrer den Ganghebel 7 in die neue Gangposition drückt, wird über die Synchronringe mehr oder weniger Kraft übertragen. Drückt der Fahrer mit großer Kraft gegen den Ganghebel 7 oder führt er den Schaltvorgang sehr schnell aus, so wird eine hohe Synchronisierungsarbeit den Synchronringen abverlangt. Gleichzeitig wird die Getriebeeingangsdrehzahl sehr schnell, passend zum neuen Gang, erhöht. Ist der Drehzahlgradient, also die Änderung der Drehzahl der Getriebeeingangswelle 12 pro Zeiteinheit, während des Schaltvorgangs groß, hat dies ein großes Reibmoment und den damit verbundenen großen Verschleiß der Synchronringe zur Folge.

In der fünften Phase wird die Kupplung 2 nach Beendigung des Schaltvorgangs wieder geschlossen.

Während des gesamten Schaltvorgangs erfasst das Sensorelement 11 die Drehzahl der Getriebeeingangswelle 12. Die erfassten Daten werden über eine Datenleitung 16 an die im Fahrzeugrechner 10 integrierte Auswerteeinheit 17 übermittelt und dort der Drehzahlgradient, also die Ableitung der Drehzahländerung nach der Zeit, der sich für den Schaltvorgang ergeben hat, ermittelt. Aus der Änderung der Getriebeeingangsdrehzahl während des Schaltvorgangs lässt sich die an den Synchronringen angreifende Reibungskraft sowie das Reibmoment bei einem Schaltvorgang in einen niedrigeren Gang wie folgt berechnen:

$$\text{Reibungskraft:} \quad F = m \cdot a \ [N]$$

$$\text{Reibmoment:} \quad M = J \cdot \alpha \ [Nm]$$

wobei gilt:

$$\alpha = \pi \cdot \frac{(n_{12} - n_{11})}{30 \cdot t} \ [s^{-2}]$$

mit:

a: Beschleunigung $[s^{-2}]$

m: Masse [kg]

J: Massenträgheitsmoment der zu schaltenden Zahnräder [$kgm^2$]

$\alpha$: Winkelbeschleunigung [$s^{-2}$]

$n_{12}$: Getriebeeingangsdrehzahl nach der Schaltung [$min^{-1}$]

$n_{11}$: Getriebeeingangsdrehzahl vor der Schaltung [$min^{-1}$]

t: Messzeit [s]

Bei einem Schaltungsvorgang in einen höheren Gang wird die Winkelbeschleunigung, da die Getriebeeingangsdrehzahl vor der Schaltung größer als nach der Schaltung ist, abweichend zu der vorgenannten Formel wie folgt berechnet:

$$\alpha = \pi \cdot \frac{(n_{11} - n_{12})}{30 \cdot t} \ [s^{-2}]$$

Da bei einem Schaltvorgang in einen höheren Gang die Getriebeeingangsdrehzahl in der Neutralstellung des Hauptgetriebes 5 durch das Ausrollen ebenfalls kleiner wird, ist die aufzuwendende Synchronisierungsarbeit in diesem Fall wesentlich geringer. Die Getriebeeingangsdrehzahl des höheren Ganges wird quasi von selbst auf Grund der Schaltdauer erreicht. Eine Erfassung von Drehzahlwerten der Getriebeeingangswelle, verbunden mit einer Auswertung findet daher bei einem Schaltungsvorgang in einen höheren Gang in der Regel nicht statt.

Neben der Information über eine Änderung der Drehzahl an der Getriebeeingangswelle ist es von besonderer Bedeutung, Kenntnisse über den Gang, in den das Getriebe mit dem jeweiligen Schaltvorgang geschaltet wird, zu erhalten. Hierzu wird mittels eines Sensorelements an der Getriebeabgangswelle 18 die Drehzahl bei eingelegtem Gang vor dem Schaltvorgang ermittelt, über eine Datenleitung an die Auswerteeinheit 17 übertragen und schließlich aus dem Verhältnis der Drehzahlen an der Getriebeeingangs- und der Getriebeabgangswelle das Übersetzungsverhältnis und damit der jeweils eingelegte Gang ermittelt. In der Auswerteeinheit ist somit während der gesamten Fahrt des Fahrzeugs eine Information über den jeweils gewählten Gang vorhanden, die sowohl dem Fahrzeugrechner zur Verfügung gestellt als auch für die Auswertung der Güte eines Schaltvorgangs nutzbar ist.

In der Auswerteeinheit 17 sind ferner bei Testfahrten sowie auf dem Prüfstand aufgenommene Referenzdaten hinterlegt, die Drehzahlwerten und einem dazugehörigen Zeitintervall bzw. einem Drehzahlgradienten jeweils einen Wert für die Schaltgüte zuordnen. Die Werte für die Schaltgüte werden schließlich in einem Datenspeicher abgelegt. Über ein Auslesegerät, das über eine Datenschnittstelle an den Fahrzeugrechner angeschlossen wird, werden die Daten schließlich aus dem Datenspeicher ausgelesen. Mit Hilfe der auf diese Weise gewonnenen Daten ist es sowohl möglich, Aussagen über etwaige Beschädigungen der Synchronringe des Synchrongetriebes als auch über das Schaltungsverhalten eines Fahrers zu machen. Die Auswertung der gewonnenen Daten erfolgt schließlich durch ausgewählte Servicestellen.

## Bezugszeichenliste

1 Motor
2 Kupplung
3 Synchrongetriebe
4 Vorschalt- bzw. Splitgruppe
5 Hauptgetriebe
6 Planeten- oder Bereichsgruppe
7 Ganghebel
8 Hinterachse
9 Display
10 Fahrzeugrechner
11 Sensorelement - Getriebeeingangswelle
12 Getriebeeingangswelle
13 Abtriebswelle
14 Achsantrieb
15 Antriebsräder
16 Datenleitung
17 Auswerteeinheit
18 Sensorelement - Getriebeabgangswelle

## Patentansprüche

1. Diagnoseverfahren für Schaltvorgänge, die in einem zwischen einem Kupplungelement (2) und einem Achsantrieb (14) angeordneten Synchrongetriebe (3) ausgelöst werden, bei dem in einem Zeitintervall wenigstens zwei Drehzahlwerte einer drehbar gelagerten und über das Kupplungselement (2) mit einer Antriebseinheit (1) in Wirkverbindung bringbaren Getriebeeingangswelfe (12) des Synchrongetriebes (3) erfasst werden, wobei die wenigstens zwei Drehzahlwerte und das dazugehörige Zeitintervall an eine Auswerteeinheit (17) übertragen werden und die Auswerteeinheit (17) aus den wenigstens zwei Drehzahlwerten unter Berücksichtigung des dazugehörigen Zeitintervalls zumindest einen Drehzahlgradienten bestimmt sowie unter Zugrundelegung des zumindest einen Drehzahlgradienten einen Gütekennwert für den Schaltvorgang festlegt, und wobei unter Berücksichtigung der Drehzahländerung pro Zeiteinheit am Getriebeeingang, die während eines Schaltvorgangs an den Getriebeeinbauteilen, insbesondere den Synchronringen, angreifenden Kräfte und/oder Momente ermittelt werden.

2. Diagnoseverfahren nach Anspruch 1, **dadurch gekennzeichnet, dass** die Drehzahlwerte und das dazugehörige Zeitintervall über eine Datenleitung (16) an die Auswerteeinheit (17) übertragen werden.

3. Diagnoseverfahren nach Anspruch 1 oder 2, **dadurch gekennzeichnet, dass** die Drehzahlwerte und das dazugehörige Zeitintervall mittels einer kabellosen Übertragungseinheit an die Auswerteeinheit (17) übertragen werden.

4. Diagnoseverfahren nach einem der Ansprüche 1 bis 3, **dadurch gekennzeichnet, dass** eine Ganginformation über den mit dem Schaltvorgang im Synchrongetriebe (3) eingelegten Gang erfasst und an die Auswerteeinheit (17) übertragen wird.

5. Diagnoseverfahren nach einem der Ansprüche 1 bis 4, **dadurch gekennzeichnet, dass** in der Auswerteeinheit ein Datensatz erzeugt wird, der Informationen über den Gütekennwert für den Schaltvorgang und die dazugehörige Ganginformation enthält.

6. Diagnoseverfahren nach einem der Ansprüche 1 bis 5, **dadurch gekennzeichnet, dass** Daten aus der Auswerteeinheit (17) an eine Datenverarbeitungseinheit übertragen werden.

7. Diagnoseverfahren nach einem der Ansprüche 1 bis 6, **dadurch gekennzeichnet, dass** Daten aus der Auswerteeinheit (17) an einen Fahrzeugrechner (10) eines Kraftfahrzeugs übertragen werden.

8. Diagnoseverfahren nach einem der Ansprüche 1 bis 7, **dadurch gekennzeichnet, dass** mit dem Gütekennwert wenigstens eine auf ein innerhalb des Synchrongetriebes (3) angeordnetes Getriebebauteil, insbesondere auf einen Synchronring, einwirkende Kraft und/oder Moment ermittelt wird.

9. Diagnosevorrichtung für Schaltvorgänge in einem schaltbaren Synchrongetriebe (3), das in einem Antriebsstrang zwischen einem Kupplungselement (2) und einem Achsantrieb (14) angeordnet ist und eine drehbar gelagerte Getriebeeingangswelle (12) aufweist, die über das Kupplungselement (2) mit einer Antriebseinheit (1) in Wirkverbindung bringbar ist, wobei wenigstens ein Sensorelement (11) vorgesehen Ist, mit dem Drehzahlwerte der Getriebeeingangswelle (12) in einem Zeitintervall erfasst werden, und wobei das Sensorelement (11) mit einer Auswerteeinheit (17) verbunden ist, mit der unter Berücksichtigung von wenigstens zwei der erfassten Drehzahlwerte und des dazugehörigen Zeitintervalls zumindest ein Drehzahlgradient ermittelt und unter Zugrundelegung des Drehzahlgradienten ein Gütekennwert für den Schaltvorgang festgelegt ist, und wobei unter Berücksichtigung der Drehzahländerung pro Zeiteinheit am Getriebeeingang, die während eines Schaltvorgangs an den Getriebeeinbauteilen, insbesondere den Synchronringen, angreifenden Kräfte und/oder Momente ermittelt werden.

10. Diagnosevorrichtung nach Anspruch 9, **dadurch gekennzeichnet, dass** die Antriebseinheit (1) ein Verbrennungsmotor, insbesondere ein Dieselmotor, ist.

11. Diagnosevorrichtung nach Anspruch 9 oder 10, **dadurch gekennzeichnet, dass** das Sensorelement (11) ein berührungslos arbeitender Messwertaufnehmer ist.

12. Diagnosevorrichtung nach einem der Ansprüche 9 bis 11, **dadurch gekennzeichnet, dass** das Sensorelement (11) ein induktiver Messwertaufnehmer ist.

13. Diagnosevorrichtung nach einem der Ansprüche 9 bis 12, **dadurch gekennzeichnet, dass** die Auswerteeinheit (17) wenigstens eine Schnittstelle aufweist, über die die Auswerteeinheit (17) mit einer Datenverarbeitungseinheit verbindbar ist.

14. Diagnosevorriehtung nach einem der Ansprüche 9 bis 13, **dadurch gekennzeichnet, dass** die Auswerteeinheit in einen Fahrzeugrechner (10) integriert ist.

15. Diagnosevorrichtung nach einem der Ansprüche 9 bis 14, **dadurch gekennzeichnet, dass** der Gütekennwert zumindest einer Eigenschaft und/oder einem Zustandswert wenigstens einer in dem Synchrongetriebe (3) vorgesehenen Synchronisierungseinrichtung zuordenbar ist.

16. Verwendung der Diagnosevorrichtung nach einem der Ansprüche 9 bis 15, zur Auswertung von Schaltvorgängen des Synchrongetriebes, die während wenigstens einer Betriebsphase eines Kraftfahrzeugs, insbesondere eines Nutzfahrzeugs, vorgenommen werden.

**Claims**

1. Diagnosis method for shifting processes which are triggered in a synchronized transmission (3) arranged between a clutch element (2) and an axial drive (14), in which in a time interval at least two rotational speed values of a rotatably mounted transmission input shaft (12), which can be operatively connected to a drive unit (1) via the clutch element (2), of the synchronized transmission (3) are detected, wherein the at least two rotational speed values and the associated time interval are transmitted to an evaluation unit (17), and the evaluation unit (17) determines at least one rotational speed gradient from the at least two rotational speed values taking into account the associated time interval, and defines a quality characteristic value for the shifting process on the basis of the at least one rotational speed gradient, and wherein the force and/or torque acting on the transmission built-in parts, in particular the synchronizing rings, during a shifting process are/is determined taking into account the change in the rotational speed per time unit at the transmission input.

2. Diagnosis method according to Claim 1, **characterized in that** the rotational speed values and the associated time interval are transmitted to the evaluation unit (17) via a data line (16).

3. Diagnosis method according to Claim 1 or 2, **characterized in that** the rotational speed values and the associated time interval are transmitted to the evaluation unit (17) by means of a cableless transmission unit.

4. Diagnosis method according to one of Claims 1 to 3, **characterized in that** a gearspeed information item relating to the gearspeed applied with the shifting process in the synchronized transmission (3) is detected and transmitted to the evaluation unit (17).

5. Diagnosis method according to one of Claims 1 to 4, **characterized in that** a data record, which contains information about the quality characteristic value for the shifting process and the associated gear speed information, is generated in the evaluation unit.

6. Diagnosis method according to one of Claims 1 to 5, **characterized in that** data from the evaluation unit (17) is transmitted to a data processing unit.

7. Diagnosis method according to one of Claims 1 to 6, **characterized in that** data from the evaluation unit (17) is transmitted to a vehicle computer (10) of a motor vehicle.

8. Diagnosis method according to one of Claims 1 to 7, **characterized in that** at least one force and/or torque acting on a transmission component, in particular on a synchronizing ring, arranged inside the synchronized transmission (3) is determined with the quality characteristic value.

9. Diagnosis apparatus for shifting processes in a synchronized transmission (3) which can be shifted and is arranged between a clutch element (2) and an axial drive (14) in a drivetrain, and which has a rotatably mounted transmission input shaft (12), which can be operatively connected to a drive unit (1) via the clutch element (2), wherein at least one sensor element (11) is provided, with which rotational speed values of the transmission input shaft (12) are detected in a time interval, and wherein the sensor element (11) is connected to an evaluation unit (17), the evaluation unit (17) determines at least one rotational speed gradient taking into account at least two of the detected rotational speed values and the associated time interval, and defines a quality characteristic value for the shifting process on the basis of the rotational speed gradient, and wherein forces and/or torques acting on the transmission built-in parts, in particular the synchronizing rings, during a shifting process are determined taking into account the change in the rotational speed per time unit at the transmission input.

10. Diagnosis apparatus according to Claim 9, **characterized in that** the drive unit (1) is an internal combustion engine, in particular a diesel engine.

11. Diagnosis apparatus according to Claim 9 or 10, **characterized in that** the sensor element (11) is a measured value pickup which operates in a contactless fashion.

12. Diagnosis apparatus according to one of Claims 9 to 11, **characterized in that** the sensor element (11) is an inductive measured value pickup.

13. Diagnosis apparatus according to one of Claims 9 to 12, **characterized in that** the evaluation unit (17) has at least one interface via which the evaluation unit (17) can be connected to a data processing unit.

14. Diagnosis apparatus according to one of Claims 9 to 13, **characterized in that** the evaluation unit is integrated into a vehicle computer (10).

15. Diagnosis apparatus according to one of Claims 9 to 14, **characterized in that** the quality characteristic value can be assigned to at least one property and/or one status value of at least one synchronizing device which is provided in the synchronized transmission (3).

16. Use of the diagnosis apparatus according to one of Claims 9 to 15, for evaluating shifting processes of the synchronized transmission which are performed during at least one operating phase of a motor vehicle, in particular of a utility vehicle.

## Revendications

1. Procédé de diagnostic pour des processus de changement de vitesse déclenchés dans une boîte de vitesses synchronisée (3) disposée entre un élément d'embrayage (2) et un entraînement d'essieu (14), dans lequel au moins deux valeurs de vitesse de rotation d'un arbre d'entrée de boîte de vitesses (12) de la boîte de vitesses synchronisée (3), disposé de façon à pouvoir pivoter et pouvant être amené en liaison active avec une unité d'entraînement (1) par le biais de l'élément d'embrayage (2), sont détectées pendant un intervalle de temps donné, les au moins deux valeurs de vitesse de rotation et l'intervalle de temps correspondant étant transmis à une unité d'analyse (17) et l'unité d'analyse (17) déterminant au moins un gradient de vitesse de rotation à partir d'au moins deux valeurs de vitesse de rotation en tenant compte de l'intervalle de temps correspondant et déterminant une valeur caractéristique de qualité pour le processus de changement de vitesse à partir de l'au moins un gradient de vitesse de rotation et les forces et/ou les couples s'engrenant pendant un processus de changement de vitesse au niveau des composants de boîte de vitesses, notamment des bagues synchrones, étant calculés en tenant compte de la variation de vitesse de rotation par unité de temps au niveau de l'entrée de boîte de vitesses.

2. Procédé de diagnostic selon la revendication 1, **caractérisé en ce que** les valeurs de vitesse de rotation et l'intervalle de temps correspondant sont transmis à l'unité d'analyse (17) par le biais d'un câble de données (16).

3. Procédé de diagnostic selon la revendication 1 ou 2, **caractérisé en ce que** les valeurs de vitesse de rotation et l'intervalle de temps correspondant sont transmis à l'unité d'analyse (17) à l'aide d'une unité de transmission sans fil.

4. Procédé de diagnostic selon l'une quelconque des revendications 1 à 3, **caractérisé en ce qu'**une information de rapport de vitesse concernant le rapport de vitesse passé dans la boîte de vitesses synchronisée (3) avec le processus de changement de vitesse est détectée et transmise à l'unité d'analyse (17).

5. Procédé de diagnostic selon l'une quelconque des revendications 1 à 4, **caractérisé en ce qu'**un jeu de données est produit dans l'unité de l'analyse, ledit jeu contenant des informations sur la valeur caractéristique de qualité du processus de changement de vitesse ainsi que l'information de rapport de vitesse correspondante.

6. Procédé de diagnostic selon l'une quelconque des revendications 1 à 5, **caractérisé en ce que** les données provenant de l'unité d'analyse (17) sont transmises à une unité de traitement de données.

7. Procédé de diagnostic selon l'une quelconque des revendications 1 à 6, **caractérisé en ce que** les données provenant de l'unité d'analyse (17) sont transmises à un ordinateur de bord (10) du véhicule automobile.

8. Procédé de diagnostic selon l'une quelconque des revendications 1 à 7, **caractérisé en ce qu'**au moins une force et/ou un couple agissant sur un composant de boîte de vitesses disposé à l'intérieur de la boîte de vitesses synchronisée (3), notamment sur une bague synchrone, sont déterminés avec la valeur caractéristique de qualité.

9. Dispositif de diagnostic pour des processus de changement de vitesse dans une boîte de vitesses synchronisée commutable (3), disposée dans une chaîne cinématique placée entre un élément d'embrayage (2) et un entraînement d'essieu (14) et comprenant un arbre d'entrée de boîte de vitesses (12) disposé de façon à pouvoir tourner, ledit arbre pouvant être amené en liaison active avec une unité d'entraînement (1) par le biais de l'élément d'embrayage (2), au moins un élément de capteur (11) étant prévu à l'aide duquel les valeurs de vitesse de rotation de l'arbre d'entrée de boîte de vitesses (12) sont détectées pendant un intervalle de temps donné, et l'élément de capteur (11) étant relié avec une unité d'analyse (17) à l'aide de laquelle au moins un gradient de vitesse de rotation est calculé en tenant compte d'au moins deux des valeurs de vitesse de rotation détectées et de l'intervalle de temps correspondant et les forces et/ou les couples s'engrenant pendant un processus de changement de vitesse au niveau des composants de boîte de vitesses, notamment des bagues synchrones, étant calculés en tenant compte de la variation de vitesse de rotation par unité de temps au niveau de l'entrée de boîte de vitesses.

10. Dispositif de diagnostic selon la revendication 9, **caractérisé en ce que** l'unité d'entraînement (1) est un moteur à combustion interne, notamment un moteur Diesel.

11. Dispositif de diagnostic selon la revendication 9 ou 10, **caractérisé en ce que** l'élément de capteur (11) est un capteur de valeurs de mesure fonctionnant sans contact.

12. Dispositif de diagnostic selon l'une quelconque des revendications 9 à 11, **caractérisé en ce que** l'élément de capteur (11) est un capteur de valeurs de mesure inductif.

13. Dispositif de diagnostic selon l'une quelconque des revendications 9 à 12, **caractérisé en ce que** l'unité d'analyse (17) comporte au moins une interface pouvant être reliée à une unité de traitement de données par le biais de l'unité d'analyse (17).

14. Dispositif de diagnostic selon l'une quelconque des revendications 9 à 13, **caractérisé en ce que** l'unité d'analyse est intégrée dans un ordinateur de bord de véhicule (10).

15. Dispositif de diagnostic selon l'une quelconque des revendications 9 à 14. **caractérisé en ce que** la valeur caractéristique de qualité peut être associée à au moins une propriété et/ou une valeur d'état d'au moins un dispositif de synchronisation prévu dans la boîte de vitesses synchronisée (3).

16. Utilisation du dispositif de diagnostic selon l'une quelconque des revendications 9 à 15, pour l'analyse de processus de changement de vitesse de la boîte de vitesses synchronisée pouvant être effectués pendant au moins une
phase de fonctionnement d'un véhicule automobile, notamment d'un véhicule utilitaire.

**Figur**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19948663 A1
- DE 19949475 A1

- EP 1146485 A2